# EUROPEAN PATENT APPLICATION

(11) **EP 1 856 972 A2**
(43) Date of publication of application: **21.11.2007**
(21) Application number: 06023865.6
(22) Date of filing: 17.11.2006
(51) Int. Cl.: A01K 63/00

(54) **Battery water circulation decoration**

(30) Priority: 17.05.2006 CN 200610060785
(71) Applicant: Hikari Hight-tech Ind.(china)Ltd., Guangzhou (CN)
(72) Inventor: Wong, Tommy Chi-Kin, Kowloon Bay (HK)
(74) Representative: Haft, von Puttkamer, Berngruber

(57) **Abstract**

A battery water circulation decoration (10) comprises a receptacle (20) to load the water, a pumping mechanism installed in the receptacle, a filtration device (30) to filtrate the water and a drive mechanism (40) to drive the pumping mechanism. The filtration device and the drive mechanism are embedded in the pumping mechanism. The drive mechanism connects to the battery (50) or solar battery that needs no conducting wire. Therefore, there is no conducting wire in the chamber of the receptacle where is full of water to start such safety issue as electric leakage and no conducting wire exposed on the decoration itself or the object to be decorated. With the battery water circulation decoration, the user is free from any safety issue and can enjoy a complete visual entertainment without any eyesore.

## Description

### BACKGROUND OF THE INVENTION

### I. Field of the Invention

The present invention relates to a decoration, particular to a battery water circulation decoration.

### II. Description of the Prior Art

Along the rising of the living standards, the decoration in home and public place has gradually gained attention. In particular, the decoration with running water such as bonsai, fountain or aquarium has become very popular and occupies a major position among the decorations. The decoration with running water usually works with an AC (alternating current) water pump. The AC water pump is, in particular, indispensable to the aquarium, which contains fishes and shrimps to provide visual entertainment. However, the feces of the fishes and shrimps would pollute the water in the aquarium and the polluted water would consequently endanger their survival in the aquarium. Therefore, the aquarium is always equipped with a filtration device so as to keep the water clean enough to keep the fishes and shrimps alive.

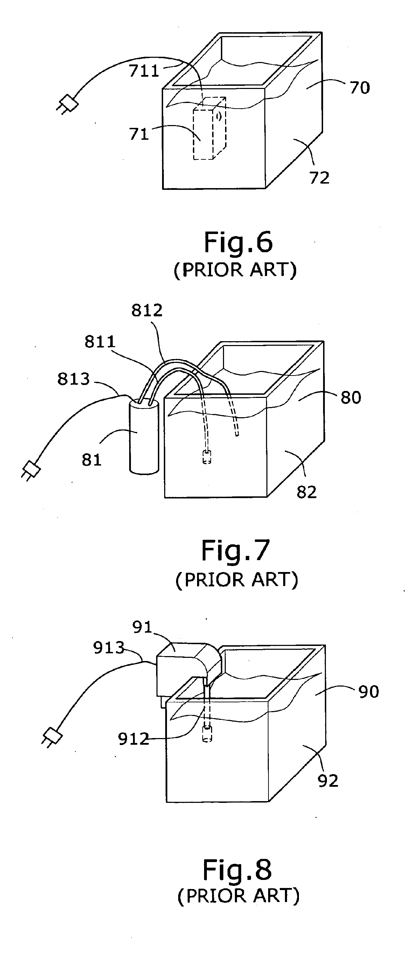

However, it is quite common for such decoration of the prior art as the aquarium, conduit to utilize an AC water pump for cleaning the water. And, the conducting wire of the AC water pump exposed in the water would endanger the life of creatures in the water and the user. The conducting wire is also exposed on the aquarium and spoils the appearance of the aquarium. Specifically, taking the aquarium or conduit 70 per Fig. 6 as the example, the filtration device 71 is placed in the receptacle 72 where is full of water. Once the conducting wire 711 of the filtration device 71 leaks the electricity, it would cause death to the creatures in the water. Besides, the conducting wire 711 is exposed on the aquarium and can be touched by anyone. Once it leaks electricity, it would endanger the life of anyone who touches it. In addition, the conducting wire 711 exposed on the aquarium is an eyesore that spoils the appearance of the aquarium.

Another aquarium or conduit 80 is shown in Fig. 7, wherein the filtration device 81, which is placed outside of the receptacle 82, absorbs and drains the water in the receptacle 82 via a siphon 811 and a drain 812. The siphon 811 and drain 812 are also eyesores that spoil the appearance of the aquarium. The conducting wire 813 connecting to the filtration device 81, which is placed right beside the receptacle 82, is exposed on the aquarium and can be touched by anyone. Under certain circumstances, it would leak the electricity to endanger the life of anyone who touches it. Furthermore, the drain 812 may drop out of the aquarium and fails the circulation and filtration of water. Under the circumstances, the creatures in the aquarium may die due to polluted water and the table or floor in the house may get wet. The drawbacks disadvantage not only the creatures in the aquarium but also the user.

The aquarium or conduit 90 per Fig. 8 is similar to the aquarium or conduit 80 in terms of structure, except the filtration 91 is hooked on the sidewall of the receptacle 92 via a hook structure 911. The siphon 912 exposed on the aquarium remains an eyesore that spoils the appearance of the aquarium.

Therefore, providing a decoration to the aquarium that avoids the foregoing drawbacks is a pressing technical issue to be solved.

### SUMMARY OF THE INVENTION

Main objective of the present invention is to provide a battery water circulation decoration without traditional conducting wire that produces no electric leakage and no eyesore so as to assure the safety and a tidy appearance to the decoration itself or the object to be decorated. No conducting wire is placed in the chamber of the receptacle where is full of water that starts no such safety issue as electric leakage. No conducting wire is exposed on the decoration itself or the object to be decorated that provides tidy appearance for a complete visual entertainment.

To achieve the foregoing objective, the battery water circulation decoration of the present invention comprises a receptacle, a pumping mechanism installed in the receptacle and a drive mechanism to power the pumping mechanism, which features a power supply by battery or solar battery.

The foregoing battery water circulation decoration is adaptive to any decoration that uses running water to provide visual entertainment such as aquarium, bonsai and fountain.

The foregoing pumping mechanism has the absorbent mouth and overflow holes.

The foregoing pumping mechanism comprises the magnetic moving element and diversion device installed on the moving element.

The wall of the foregoing receptacle bulges toward the chamber of the receptacle to form a cylinder, which embeds the magnet rotor impellor inside and is surrounded outside by a drive mechanism that drives the magnet rotor impellor.

The wall of the foregoing receptacle bulges outwardly to form a cylinder on the wall. The magnet rotor impellor is hitched on the top of the cylinder and driven by a drive mechanism that is embedded in the cylinder.

The magnet membrane device is installed on the wall of the foregoing receptacle and is driven to vibrate up and down by a drive mechanism, which is installed outside the receptacle.

A circuit control device, which is a general device controlling the time, current, switch and electric frequency, is installed between the foregoing battery and drive mechanism.

The foregoing pumping mechanism comprises the absorbent mouth or overflow holes connecting to a filtration device with filtration material or a diversion device.

The overflow holes of the foregoing pumping mechanism connect to a pipe that has one or more than one overflow hole.

A pervious laminated board, which comprises the holes or grid grooves, is installed near the bottom of the foregoing receptacle with an interface.

An interface to the pervious laminated board or the object to be decorated is installed on the wall of the foregoing receptacle.

The foregoing pervious laminated board is installed between the absorbent mouth and the overflow hole of the foregoing pumping mechanism.

The wall of the receptacle bulges toward the chamber of the receptacle to form a box to embed the lighting element or battery or solar battery.

The decoration element, which is driven to sway by the flow, is installed inside the foregoing receptacle.

The foregoing receptacle has an irrigation device, which is a duct, a diversion channel.

The battery water circulation decoration of the present invention comprises a drive mechanism that uses battery or solar battery and needs no traditional conducting wire. Under the circumstances, no conducting wire would be placed in the chamber of the receptacle where is full of water and exposed on the decoration itself or the object to be decorated. The present invention can thus assure the safety and a tidy appearance for visual entertainment.

### BRIEF DESCRIPTION OF THE DRAWINGS

Fig. 1 is a three-dimensional view of the battery water circulation decoration of the invention.
Fig. 2 is a cross-sectional view of the details of Fig. 1.
Fig. 3 is an enlarged sectional view of the decoration structure of Fig. 1.
Fig. 4 is an enlarged sectional view of the bonsai of Fig. 1.
Fig. 5 is a sectional view of the solar battery installed on the bottom of the receptacle.
Fig. 6 is a sectional view showing the structure of a prior art.
Fig. 7 is a sectional view showing the structure of another prior art.
Fig. 8 is a sectional view showing the structure of a third prior art.

### DESCRIPTION OF THE PREFERRED EMBODIMENT

Further structure, installation, and desirable features of the present invention will be better understood from the detailed description and drawings that follow, in which various embodiments of the disclosed invention are illustrated by way of example.

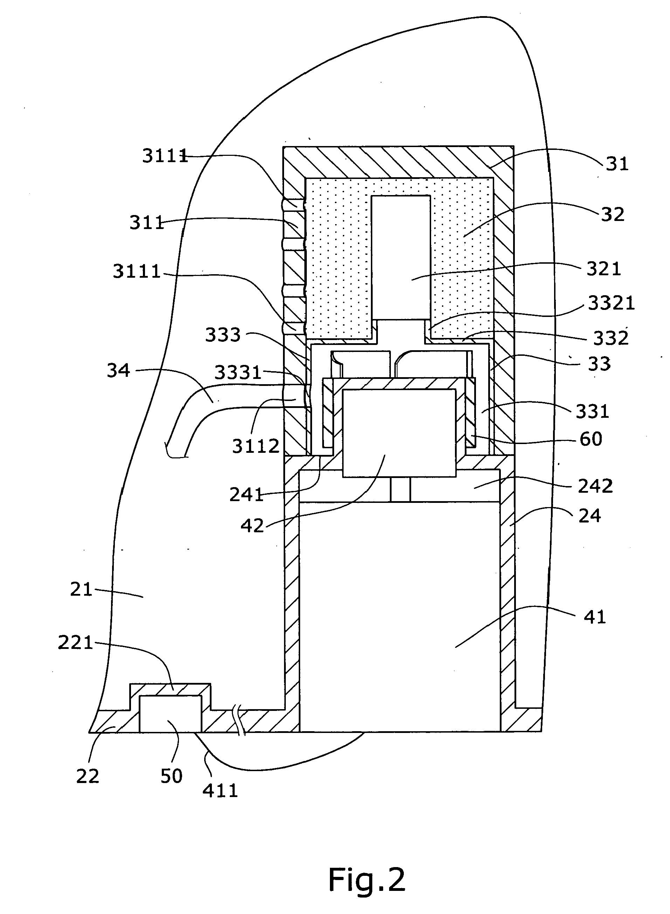

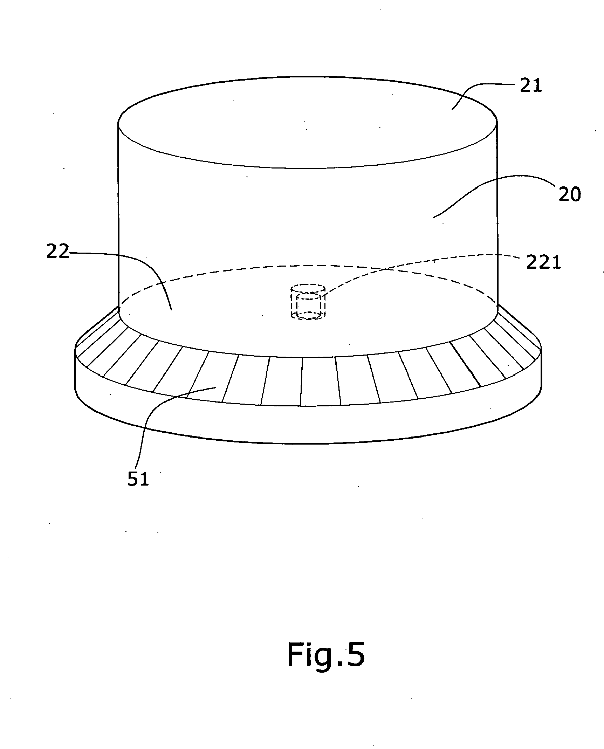

The battery water circulation decoration 10 of the present invention is a device for the circulation and filtration of water that comprises a receptacle 20 to load the water and a pumping mechanism that comprises a filtration device 30 and a drive mechanism 40 so as to filtrate the water while pumping. The drive mechanism 40 connects to the battery 50 or solar battery 51(Fig. 2 and 5), the battery water circulation decoration 10 of the present invention thus needs no traditional AC alternating current drive mechanism with a conducting wire. Under the circumstances, the present invention that has no conducting wire in the chamber 21 of the receptacle 20 is free of the danger of electric leakage in the water and can assure the safety in use. Furthermore, the present invention has no conducting wire exposed on the aquarium to spoil the appearance of the aquarium.

Wherein the filtration device 30 and the drive mechanism 40 are installed in and outside the chamber 21 of the receptacle 20. The drive mechanism 40 in this embodiment comprises the electric machinery 41 and cylinder-shaped magnet 42 fixed on the output shaft of the electric machinery.

The receptacle 20 in this embodiment is transparent and a right circular cylinder; however, it may be of any cuboids or other shapes, i.e. a rectangular box. The installation base may be of any cubic structure, however, it is a cylinder 24 in this embodiment that is raised from the bottom wall 22 of the receptacle 20. Under certain circumstances, the cylinder 24 can be raised from the sidewall 23 to the bottom wall 22 or to the center of the chamber 21. The preferred embodiment for the cylinder 24 is a cone-shaped cylinder narrowing to the top from the bottom and lies on the bottom wall 22.

An installation surface 241 is horizontally installed on the top of the cylinder 24 and a ladder hole 242 inside the cylinder: the filtration device 30 is erected on the installation surface 241 and the electric machinery 41 and the cylinder-shaped magnet 42 are embedded in the ladder hole 242 from the bottom to the top. The electric machinery 41 is powered by the battery 50 via a conducting wire 41 1 (Fig. 2).

The magnet rotor impellor 60, which -is a moving element of magnetism and may be replaced by other element such as magnetic membrane, is hitched to the top of the cylinder 24 and rotates to drain the water.

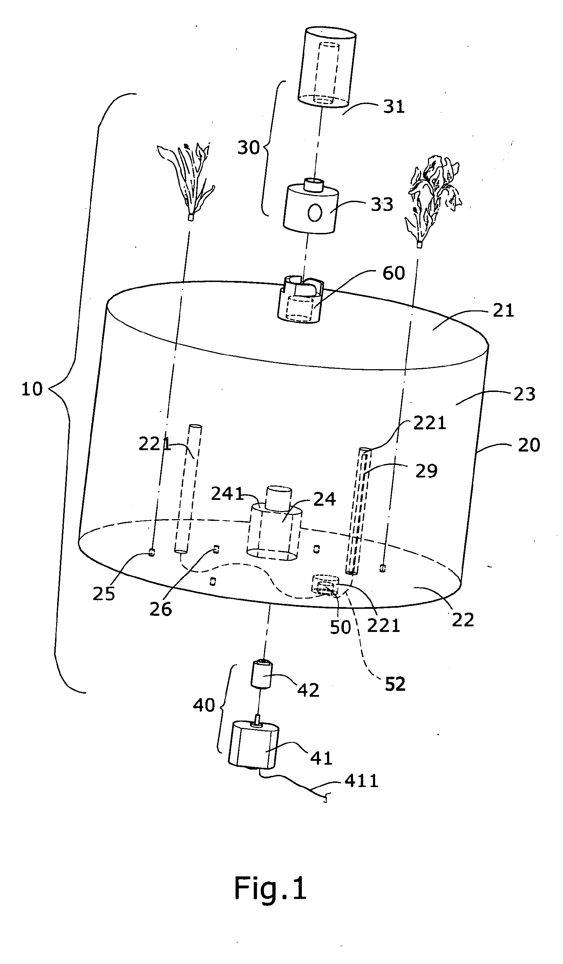

As shown in Fig. 1 and 2 that the filtration device 30 that is erected on the installation surface 241 comprises a cylinder-shaped housing 31, a filtration material 32 accommodated in the housing and a diversion device 33, which seals the bottom of the housing 31 to enclose the filtration material 32 inside the housing 31. The magnet rotor impellor 60 is installed in the diversion device 33. The housing 31 has an absorbent mouth on the sidewall 311 that penetrates the chamber 21 of the receptacle 20 to absorb the water. A channel 321 vertically penetrates into the filtration material 32. The cylinder-shaped diversion device 33 comprises a nozzle 3321, which juts out from the center of top wall 332 of the lumen 331, and a porthole, which is on the bottom to sleeve the magnet rotor impellor 60. The sidewalls 311, 333 of the housing 31 and the diversion device 30 have overflow holes 3112, 3331 horizontally installed or the drainpipe 34 connected to. Movement of the magnet rotor impellor 60 or magnetic membrane driven by the intermittent magnetic absorption to absorb/drain the water drains the water in the lumen 331 of the diversion device from the overflow holes 3112, 3331 or the drainpipe 34.

The drive mechanism 40 connects to the battery 50, which can be installed in any place that is close to the drive mechanism 40. In this embodiment, the bottom wall 22 of the receptacle 20 bulges toward the chamber to form a box 221 for embedding the battery 50 that powers the electric machinery 41.

To use the battery water circulation decoration 10 of the present invention for the circulation and filtration of water, just place the battery 50 inside so as to power the electric machinery 41, wherein the magnet 42 drives the magnet rotor impellor 60 to rotate so as to absorb the water into the chamber 21 of the receptacle 20 via the absorbent mouth 3321 on the housing 31. The water absorbed into the chamber 21 would be filtrated while passing through the channel 321 of the filtration material 32. The filtrated water would be guided via the nozzle 3321 into the diversion chamber where it would be drained via the overflow holes 3112, 3331 or a drainpipe 34. The water in the chamber 21 of the receptacle 20 is thus filtrated in circulation.

Furthermore, a lighting element 29 can be installed inside the box 221 on the bottom wall 22 of the receptacle 20, and is powered by the battery 50 or solar battery 51 via a conducting wire 52.

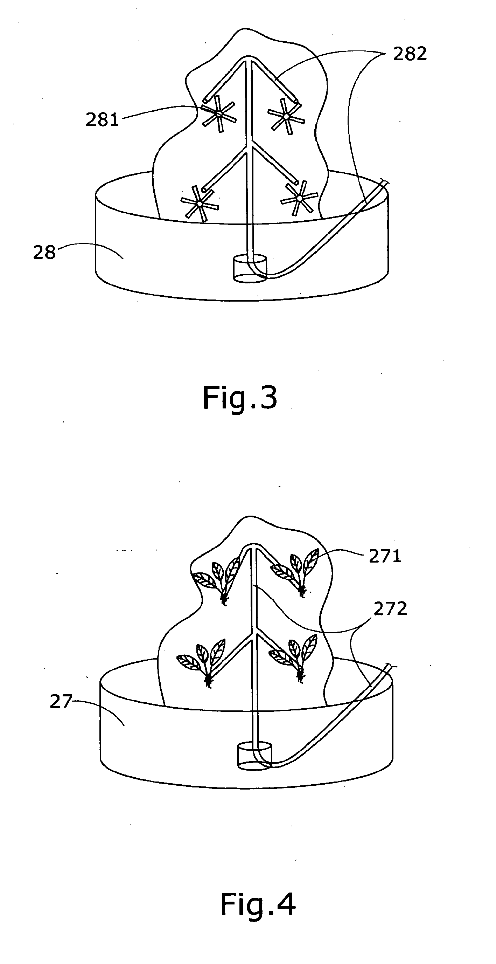

As shown in Fig. 1 and 3, a decoration structure 28, which comprises a decoration element 281 that is driven to sway by the fluidity, is installed in the receptacle 20 so as to embellish the battery water circulation accessory 10. In this embodiment, the decoration element 281 is a tree-like holder with several pinwheels. The pinwheels are hanged at the end of a duct 282. The water drained from the diversion device 34 passes through the ducts 282 to form the flows that drive the pinwheels to sway. The flow rate coming from the duct dominates the movement speed of the decoration element. To adjust the movement speed of the decoration element, it only needs to change the caliber of the duct that controls the flow rate.

As show in Fig. 1 and 4 that the decoration structure is a bonsai 27 that includes the water plants 271. To maintain the growth of the water plants, the duct 272 is connected to the diversion device 34 so as to irrigate the water plants with water drained from the diversion device 34. The flow rate coming from the duct is dominated by the caliber of the duct. To control the flow rate for irrigation, it only needs to change the caliber of the duct.

The receptacle 20 may also have the pervious laminated board that comprises holes or grid grooves. The preferred embodiment is to install the pervious laminated board between the absorbent mouth 3111 on the filtration device 30 and the overflow hole 3112, and to install the interface 25, 26 connecting to the decoration element on the bottom wall 22 of the receptacle 20.

Besides, the battery 50 and solar battery 51 can be used simultaneously or alternately. Where the solar battery 51 stops supplying the power for absorbing the light energy, the battery 50 works instead. As shown in Fig.1 and 5 that the solar battery 51 is installed around the bottom of the receptacle 20 so as to be exposed to the sun light for absorbing the solar energy that can be transferred into the electric power. The electric power is transmitted to the electric machinery 41 to drive the filtration device 30 for the circulation and filtration of water. Both of the solar battery 51 and the battery 50 share the same principle to supply the electric power. Therefore, the power supply by the solar battery 51 hereby will not go into details. To fix the solar battery 51 around the bottom of the receptacle 20, the bottom wall 22 of the receptacle 20 bulges in the center to form a box 221 so as to embed the fitting of the solar battery 51 that locks the solar battery in a fix position.

According to the foregoing description, the drive mechanism 40 is removed of the traditional conducting wire for AC electric power supply. Under the circumstances, the present invention that has no conducting wire in the chamber 21 of the receptacle 20 is free of the danger of electric leakage in the water and can assure the safety in use. Furthermore, no exposed conducting wire would spoil the appearance of the present invention.

New characteristics and advantages of the present invention covered by this document have been set forth in the foregoing description. Understanding is sought however, that the drawings are for the purpose of illustration only and not intended to be a definition of the limits of the present invention. Changes in methods, shapes, structures or devices may be made in details without exceeding the scope of the invention by those who are skilled and knowledgeable in the field.

To sum up, in view no conducting wire in the chamber of the receptacle to cause electric leakage and no exposed conducting wire to spoil the appearance, the "battery water circulation decoration" of the present invention assures the safety in use and a tidy appearance to the decoration itself and the object to be decorated so as to possess the "practicability" and the "advancement" of the industry. Furthermore, in view the structure of the present invention has never been disclosed in any publication or for any application, the present invention conforms to the requirements of the new utility model. This document is, therefore, submitted for applying the patent registration pursuant to the Patent Act.

## Claims

1. A battery water circulation decoration comprises a receptacle, a pumping mechanism installed in the receptacle and a drive mechanism to drive the pumping mechanism. The characteristic lies in: the drive mechanism connects to the battery or solar battery.

2. The battery water circulation decoration of claim 1, the characteristic lies in: the pumping mechanism has the absorbent mouth and overflow hole.

3. The battery water circulation decoration of claim 1, the characteristic lies in: the pumping mechanism has magnetic moving element installed in a diversion device.

4. The battery water circulation decoration of claim 1, the characteristic lies in: the wall of the receptacle bulges toward the chamber to form a cylinder, where a magnet rotor impellor is hitched on the top and a drive mechanism is embedded inside to drive the magnet rotor impellor.

5. The battery water circulation decoration of claim 1, the characteristic lies in: the wall of the receptacle bulges outwardly to form a cylinder on the wall, where a magnet rotor impellor surrounds outside and a drive mechanism is embedded inside to drive the magnet rotor impellor.

6. The battery water circulation decoration of claim 1, the characteristic lies in: a magnet membrane device is installed on the wall of the receptacle and a drive mechanism is installed outside the chamber of the receptacle to drive the magnet membrane device.

7. The battery water circulation decoration of claim 1, the characteristic lies in: a circuit control device is installed between the battery and the drive mechanism.

8. The battery water circulation decoration of claim 2, the characteristic lies in: the absorbent mouth or overflow holes of the pumping mechanism connect to a filtration device with filtration material or a diversion device.

9. The battery water circulation decoration of claim 2, the characteristic lies in: the overflow holes of the pumping mechanism connect to a pipe that has one or more than one overflow hole.

10. The battery water circulation decoration of claim 1, the characteristic lies in: a pervious laminated board, which comprises the holes or grid grooves and an interface to the object to be decorated, is installed near the bottom of the receptacle.

11. The battery water circulation decoration of claim 1, the characteristic lies in: an interface to the pervious laminated board or the object to be decorated is installed on the wall of the receptacle.

12. The battery water circulation decoration of claim 10 or 11, the characteristic lies in: the pervious laminated board is installed between the absorbent mouth and the overflow hole of the pumping mechanism.

13. The battery water circulation decoration of claim 1, the characteristic lies in: the wall of the receptacle bulges toward the chamber to form a box to embed the lighting element or battery or solar battery.

14. The battery water circulation decoration of claim 1, the characteristic lies in: the decoration element, which is driven to sway by the flow, is installed in the receptacle.

15. The battery water circulation decoration of claim 1, the characteristic lies in: an irrigation device is installed on the receptacle for irrigate the water plants.
